# EUROPEAN PATENT APPLICATION

(11) **EP 4 075 240 A1**
(43) Date of publication of application: **19.10.2022**
(21) Application number: 21753360.3
(22) Date of filing: 20.01.2021
(51) Int. Cl.: G06F 3/01

(54) **IMAGE DISPLAY METHOD AND RELATED PRODUCT**

(30) Priority: 10.02.2020 CN 202010085769
(71) Applicant: GUANGDONG OPPO MOBILE TELECOMMUNICATIONS CORP., LTD., Dongguan, Guangdong 523860 (CN)
(72) Inventor: FANG, Pan, Dongguan, Guangdong 523860 (CN); CHEN, Yan, Dongguan, Guangdong 523860 (CN)
(74) Representative: Mewburn Ellis LLP
(86) International application number: PCT/CN2021/072895
(87) International publication number: WO 2021/159935

(57) **Abstract**

A method for image display and related products are provided in implementations of the disclosure. The method is applied to an electronic device including an eye tracking module. The method includes the following. On condition that the electronic device displays multiple images, a fixation duration of a user with respect to each of the multiple images is determined via the eye tracking module. A target image in the multiple images is determined according to the fixation duration. A reference image corresponding to the target image in a preset gallery is displayed. By adopting the implementations of the disclosure, personalized image display can be achieved.

## Description

### TECHNICAL FIELD.

This application relates to the field of computer technology, and in particular to a method for image display and related products.

### BACKGROUND

With the rapid development of computer technology, electronic devices such as mobile phones have become the necessities in human life and work. With the increasing frequency of using electronic devices, demand of users for individualization of electronic devices is also increasing. At present, in most mainstream applications in the electronic devices, images can be displayed according to historical data of the user. If the user is a new user, it is difficult to display an image corresponding to individuality of the new user.

### SUMMARY

Implementations of the disclosure provide a method for image display and related products, which can realize personalized image display.

In a first aspect, implementations of the disclosure provide a method for image display. The method is applied to an electronic device including an eye tracking module. The method includes the following.

On condition that the electronic device displays multiple images, a fixation duration of a user with respect to each of the multiple images is determined via the eye tracking module. A target image in the multiple images is determined according to the fixation duration. A reference image corresponding to the target image in a preset gallery is displayed.

In a second aspect, implementations of the disclosure provide an apparatus for image display. The apparatus is applied to an electronic device including an eye tracking module. The apparatus includes a determining unit and a displaying unit.

The determining unit is configured to determine, via the eye tracking module, a fixation duration of a user with respect to each of multiple images on condition that the electronic device displays the multiple images, and determine a target image in the multiple images according to the fixation duration. The displaying unit is configured to display a reference image corresponding to the target image in a preset gallery.

In a third aspect, implementations of the disclosure provide an electronic device. The electronic device includes a processor, and an eye tracking module and a display coupled with the processor. The eye tracking module is configured to determine a fixation duration of a user with respect to each of multiple images on condition that the electronic device displays the multiple images. The processor is configured to determine a target image in the multiple images according to the fixation duration. The display is configured to display a reference image corresponding to the target image in a preset gallery.

In a fourth aspect, implementations of the disclosure provide an electronic device. The electronic device includes a processor, an eye tracking module, a display, a communication interface, a memory, and one or more programs. The one or more programs are stored in the memory and configured to be executed by the processor. The programs include instructions for performing all or part of steps described in the first aspect.

In a fifth aspect, implementations of the disclosure provide a computer-readable storage medium. The computer-readable storage medium stores a computer program. The computer program causes a computer to perform all or part of steps described in the first aspect of the implementations of the disclosure.

In a sixth aspect, implementations of the disclosure provide a computer program product. The computer program product includes a non-transitory computer-readable storage medium storing a computer program. The computer program is operable for a computer to perform all or part of steps described in the first aspect of the implementations of the disclosure. The computer program product can be a software package.

In implementations of the disclosure, if an electronic device displays multiple images, a fixation duration of a user with respect to each of the multiple images is determined via an eye tracking module. A target image in the multiple images is then determined according to the fixation duration. A reference image corresponding to the target image in a preset gallery is then displayed. In this way, the image can be displayed according to the fixation duration of the user, so that the user-preferred image can be displayed, which achieves personalized image display.

### BRIEF DESCRIPTION OF THE DRAWINGS

In order to illustrate technical solutions in implementations of the disclosure more clearly, the following briefly introduces the drawings that are used in the description of the implementations. Obviously, the drawings in the following description are some implementations of the disclosure. For those of ordinary skill in the art, other drawings can also be obtained from these drawings without any creative effort.
FIG. 1 is a schematic structural diagram of an electronic device provided in implementations of the disclosure.
FIG. 2 is a schematic flowchart of a method for image display provided in implementations of the disclosure.
FIG. 3 is schematic diagram illustrating a scenario of image display provided in implementations of the disclosure.
FIG. 4 is a schematic structural diagram of another electronic device provided in implementations of the disclosure.
FIG. 5 is a schematic structural diagram of an apparatus for image display provided in implementations of the disclosure.

### DETAILED DESCRIPTION

The terms used in implementations of the disclosure are only used to explain specific implementations of the disclosure, but are not intended to limit the disclosure. The terms "first", "second", "third" and "fourth" in the description, claims, and drawings of the disclosure are used to distinguish different objects, rather than to describe a specific order. Furthermore, the terms "comprising" and "having" and any variations thereof are intended to cover non-exclusive inclusion.

Reference herein to an "implementation" means that a particular feature, structure, or characteristic described in connection with the implementation can be included in at least one implementation of the disclosure. The using of the term in various places in the specification are not necessarily all referring to the same implementation, nor a separate or alternative implementation that is mutually exclusive of other implementations. It is explicitly and implicitly understood by those skilled in the art that an implementation described herein may be combined with other implementations.

An electronic device involved in implementations of the disclosure may include various handheld devices, vehicle-mounted devices, wearable devices, and computing devices with wireless communication functions, or other processing devices connected to wireless modems, as well as various forms of user equipment (UE), mobile station (MS), terminal device and so on. For convenience of description, the devices mentioned above are collectively referred to as electronic devices.

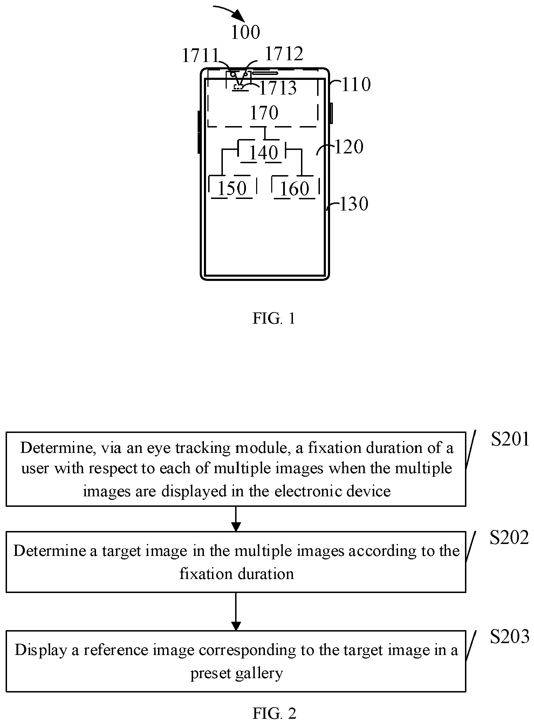

Referring to FIG. 1, FIG. 1 is a schematic structural diagram of an electronic device 100 provided in implementations of the disclosure. As illustrated in FIG. 1, the above-mentioned electronic device 10 includes a housing 110, a display 120 disposed on the housing 110, and a mainboard 130 disposed within the housing 110. The mainboard 130 is provided with a processor 140 coupled with the display 120, and a memory 150, a radio frequency (RF) circuit 160, and a sensor module 170 coupled with the processor 140.

In implementations of the disclosure, the display 120 includes a display drive circuit, a display screen, and a touch screen. The display drive circuit is configured to control the display screen to display content according to display data and display parameters (e.g., brightness, color, saturation, etc.) of the screen. The display screen may include one or a combination of a liquid crystal display screen, an organic light emitting diode display screen, an electronic ink display screen, a plasma display screen, and a display screen using other display technologies. The touch screen is configured to detect a touch operation. The touch screen may include a capacitive touch sensor formed by an array of transparent touch sensor electrodes (e.g., indium tin oxide (ITO) electrodes), or may include a touch sensor formed using other touch technologies, such as sonic touch, pressure-sensitive touch, resistive touch, optical touch, etc., which are not limited in the implementations of the disclosure.

The mainboard 130 may have any size and shape that is adapted to the electronic device 100, which is not limited herein.

The processor 140 is a control center of the electronic device 100. The processor 140 uses various interfaces and lines to connect various parts of the electronic device, and performs various functions of the electronic device 100 and processes data by running or executing software programs and/or modules stored in the memory 150 and invoking data stored in the memory 150, so as to monitor the electronic device 100 overall. The processor 140 includes an application processor and a baseband processor. The application processor mainly handles an operating system, user interfaces, and application programs. The baseband processor mainly handles wireless communication. It can be understood that the above-mentioned baseband processor may not be integrated into the processor.

The memory 150 may be configured to store software programs and modules, and the processor 140 executes various functional applications and data processing of the electronic device 100 by running the software programs and modules stored in the memory 150. The memory 150 may mainly include a program-storing area and a data-storing area. The program-storing area may store an operating system, an application program required for at least one function, and the like. The data-storing area may store data or the like created according to the use of the electronic device. Additionally, the memory 150 may include a high-speed random access memory, and may also include a non-volatile memory, such as at least one magnetic disk storage device, flash memory device, or other volatile solid state storage device.

The RF circuit 160 is configured to provide the electronic device 100 with the ability to communicate with external devices. The RF circuit 160 may include an analog and digital input and output interface circuit, and a wireless communication circuit based on RF signals and/or optical signals. The wireless communication circuit in the RF circuit 160 may include an RF transceiver circuit, a power amplifier circuit, a low noise amplifier, a switch, a filter, and an antenna. For example, the wireless communication circuit in the RF circuit 160 may include a circuit for supporting near field communication (NFC) by transmitting and receiving near field coupled electromagnetic signals. For example, the RF circuit 160 may include a NFC antenna and a NFC transceiver. The RF circuit 160 may also include a cellular telephone transceiver and antenna, a wireless local area network transceiver circuit and antenna, and the like.

The sensor module 170 includes an eye tracking module 171. The eye tracking module 171 is configured to determine a fixation location and fixation duration of a user with respect to the display 120. The eye tracking module 171 may include an image processor 1713, and a camera 1711 and a distance sensor 1712 coupled with the image processor 1713 as illustrated in FIG. 1. It can be understood that when a human eye looks at different directions, there will be subtle changes in the eye. The eye tracking module 171 may obtain feature information related to such changes, for example, by image capturing or scanning. By tracking the changes of the eye in real-time, a condition and requirement of the user can be predicted and responded, thus achieving control of the device through the eye.

In implementations of the disclosure, the camera 1711 is configured to capture a fixation image of a user, and the distance sensor 1712 is configured to determine a distance between the user and the display 120. The image processor 1713 is configured to determine a fixation location and a fixation duration corresponding to the fixation location according to the fixation image and the distance.

The method for the image processor 1713 to determine the fixation location is not limited in this disclosure. In a first implementation, the image processor 1713 may extract an eye image in the fixation image and obtain a target image by processing the eye image according to the distance. The image processor 1713 then compare the target image with an image in the display 120, and a location of the image successfully matched is determined as the fixation location. It can be understood that the eye image can reflect the content that the user fixed his/her eyes on. Processing the eye image according to the distance facilitates to improve accuracy of image comparison.

In a second implementation, the image processor 1713 may pre-store mapping among eye positions, distances, and locations in the display. With the mapping, the image processor 1713 can determine the eye position according to the eye image, and then determine a location in the display corresponding to the eye position and the distance as the fixation location. It can be understood that the movement direction of the eye can represent a fixation direction of the user, and the distance can represent a fixation range of the user.

It is to be noted that the method for determining the fixation location can follow any of two implementations above, which will not be repeated herein. These two implementations do not constitute limitations to the implementations of the disclosure. In practical applications, other methods for determining the fixation location may also be used.

In implementations of the disclosure, the sensor module 170 may further include sensors such as an electronic compass, a gyroscope, a light sensor, a barometer, a hygrometer, a thermometer, an infrared sensor, and the like (not shown).

The above is just an example. The electronic device 100 further includes input and output interfaces such as an audio input interface, a serial port, a keyboard, a speaker, and a charging interface, and a camera, a Bluetooth module and other modules not shown, which are not limited in this disclosure.

In implementations of the disclosure, the eye tracking module 171 is configured to determine a fixation duration of a user with respect to each of multiple images when the multiple images are displayed on the electronic device. The processor 140 is configured to determine a target image in the multiple images according to the fixation duration. The display 120 is configured to display a reference image corresponding to the target image in a preset gallery.

As such, the image can be displayed according to the fixation duration of the user, so that the image that the user prefers can be displayed, achieving personalized image display.

In a possible example, in terms of determining the target image in the multiple images according to the fixation duration, the processor 140 is specifically configured to determine an interest value of a first image according to a fixation duration of the first image, where the first image is any of the multiple images, and determine the first image as the target image in response to the interest value being greater than a first threshold.

In a possible example, in terms of determining the interest value of the first image according to the fixation duration of the first image, the processor 140 is specifically configured to determine an image location of the first image, determine an average attention duration corresponding to the image location, and obtain the interest value of the first image by calculating a ratio of the fixation duration of the first image to the average attention duration.

In a possible example, in terms of displaying the reference image corresponding to the target image in the preset gallery, the processor 140 is further configured to determine an image feature of the target image, obtain a reference image corresponding to the image feature from the preset gallery, and display the reference image.

In a possible example, if the target image includes multiple target images, in terms of determining the image feature of the target image, the processor 140 is specifically configured to partition each of the multiple target images to obtain multiple sub-region image sets, where each sub-region image set corresponds to one region and includes at least one sub-region image, perform feature extraction on each sub-region image in the multiple sub-region image sets to obtain multiple sub-region feature sets, where each sub-region image corresponds to one sub-region feature set, and obtain an image feature of the multiple target images by counting a number of features of each sub-region feature in the multiple sub-region feature sets.

In a possible example, in terms of obtaining the reference image corresponding to the image feature from the preset gallery, the processor 140 is specifically configured to render a comparison image according to the image feature of the multiple target images, compare the comparison image with each image in the preset gallery to obtain multiple similarity values, and determine at least one image corresponding to a similarity value greater than a second threshold in the multiple similarity values as the reference image.

In a possible example, if the target image includes multiple target images, in terms of displaying the reference image, the processor 140 is specifically configured to determine a presentation order of the multiple reference images according to the plurality of similarity values, and display the multiple reference images in the presentation order.

The implementations of the disclosure are described in detail below.

Referring to FIG. 2, FIG. 2 is a schematic flowchart of a method for image display provided in implementations of the disclosure. As illustrated in FIG. 2, the method for image display is applied to an electronic device which includes an eye tracking module. The method includes the following.

S201, a fixation duration of a user with respect to each of multiple images is determined via the eye tracking module on condition that the electronic device displays the multiple images.

As described above, the eye tracking module can determine a fixation location of a user with respect to the display and the fixation duration corresponding to the fixation location. As such, the fixation duration of the user with respect to each of the multiple images can be determined via the eye tracking module.

In implementations of the disclosure, the images may be images of different objects, such as people images, animal images, or landscape images, or updatable images such as avatars, desktop images, or screensaver images, or example images, logo images, etc., which will not be limited herein.

For example, after the user starts a gallery application, the electronic device may display multiple images obtained before by shooting, collecting, or taking screenshots. After the user starts a shopping application, the electronic device may display multiple different shopping items, each of which corresponds to one representative image. After the user starts a component for updating an avatar, the electronic device may display multiple images to-be-selected corresponding to a selected path.

S202, a target image in the multiple images is determined according to the fixation duration.

In implementations of the disclosure, the target image is an image that the user prefers in the multiple image. It can be understood that a longer fixation duration of the user with respect to the image may mean that the user has a higher interest in the image. It is to be noted that the target image may be multiple target images.

The method for determining the target image is not limited in the disclosure. An image corresponding to a fixation duration longer than a preset threshold can be determined as the target image. In one possible example, step S202 includes step A11 and step A12.

A11, an interest value of a first image is determined according to a fixation duration of the first image.

The first image may be any of the multiple images. The interest value indicates the interest of the user in the first image. The longer the fixation duration, the greater the interest value, indicating that the user is more interested in the first image.

The method for determining the interest value is not limited in the disclosure. In one possible example, step A11 includes steps A111-A113.

A111, an image location of the first image is determined.

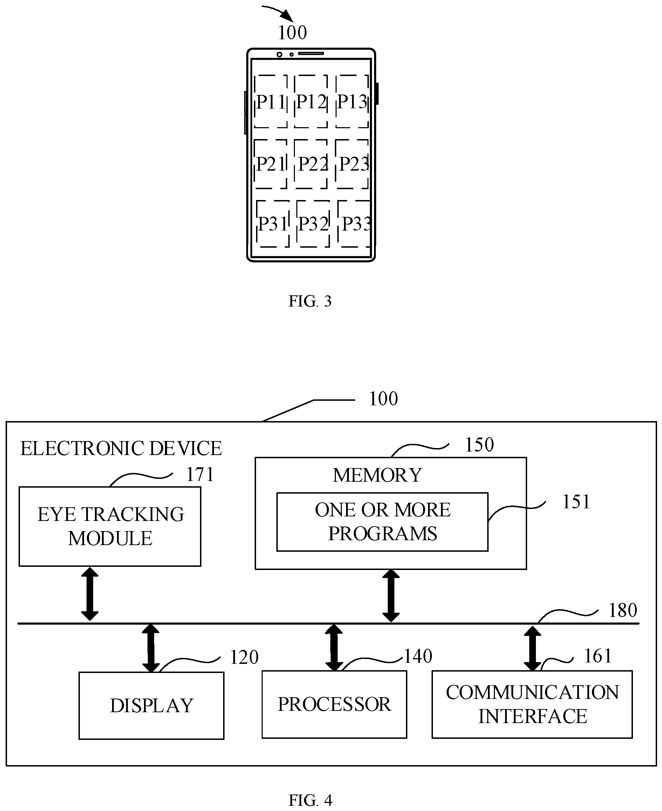

The image location refers to a location of the first image in the display. The image location may be described according to coordinates in the display. For example, as illustrated in FIG. 3, nine images are displayed in the display. In a case that the first image is an image corresponding to P22, the image location of the first image can be determined as center coordinates corresponding to P22. The image location may also be described according to a display location of the display. For example, referring to FIG. 3, in the case that the first image is the image corresponding to P22, P22 is determined as the image location of the first image.

A112, an average attention duration corresponding to the image location is determined.

The average attention duration is a fixation duration with respect to each image location without considering interest. The average attention duration can be determined according to user habits. For example, referring to FIG. 3, when the user views nine images as illustrated in FIG. 3, an average attention duration of P11 is 0.12s, an average attention duration of P12 is 0.15s, an average attention duration of P13 is 0.1s, an average attention duration of P21 is 0.15s, an average attention duration of P22 is 0.2s, an average attention duration of P23 is 0.16s, an average attention duration of P31 is 0.1s, an average attention duration of P32 is 0.12s, and an average attention duration of P33 is 0.08s.

It is to be noted that if the user is a new user, default data may be used. For example, when viewing multiple images, most people look at the middle image first, then the upper image, and finally the lower image. Additionally, most people look at the image on the left first, then the image on the right. However, when viewing an image, other images in a same interface can be glanced. Therefore, an average attention duration of the later viewed image is slightly shorter than that of the first viewed image.

A113, the interest value of the first image is obtained by calculating a ratio of the fixation duration of the first image to the average attention duration.

It can be understood that if the average attention duration is fixed, the longer the fixation duration, the larger the ratio, that is, the larger the interest value. In steps A111-A113, the image location of the first image is first determined, and then the average attention duration corresponding to the image location is determined. Afterwards, the ratio of the fixation duration of the first image to the average attention duration is calculated to obtain the interest value of the first image. In this way, accuracy of determination of the interest value can be improved.

For example, as illustrated in FIG. 3, assume that average attention durations of P11, P12, P13, P21, P22, P23, P31, P32, and P33 are 0.12s, 0.15s, 0.1s, 0.15s, 0.2s, 0.16s, 0.1s, 0.12s, and 0.08s respectively. In a case that fixation durations of P11, P12, P13, P21, P22, P23, P31, P32, and P33 are 0.15s, 0.12s, 0.08s, 0.15s, 0.25s, 0.14s, 0.08s, 0.12s, and 0.05s respectively, then interest values of P11, P12, P13, P21, P22, P23, P31, P32, and P33 are 1.25, 0.8, 0.8, 1, 1.25, 0.875, 0.8, 1, and 0.625 respectively.

A12, the first image is determined as the target image in response to the interest value being greater than a first threshold.

The first threshold is not limited in the disclosure. The first threshold can be determined according to historical data of the user. For example, the number of viewing times per image in the gallery is calculated and an average number of viewing times is obtained according to the number of viewing times per image. Optionally, only the number of viewing times per collected image in the gallery is calculated and an average number of viewing times is obtained according to the number of viewing times per collected image. The first threshold is determined according to the average number.

It can be understood that the above description is made with any of multiple images as an example. For other images, reference may be made to step A11 and step A12, which will not be repeated herein. If an interest value of an image is greater than the first threshold, the image may be determined as the target image. As such, the target image is determined according to the interest value, which can improve accuracy of determination of the target image.

For example, assume that interest values of P11, P12, P13, P21, P22, P23, P31, P32, and P33 are 1.25, 0.8, 0.8, 1, 1.25, 0.875, 0.8, 1, and 0.625 respectively. If the first threshold is 1, P11, P21, P22, and P32 are determined as target images.

S203, a reference image corresponding to the target image in a preset gallery is displayed.

The preset gallery is not limited in the disclosure. The preset gallery may be a gallery in the electronic device, or a gallery in a corresponding application. For example, in a scenario of desktop image selection, the preset gallery is a gallery in a desktop image application. The preset gallery may also be a gallery searched in the application. For example, in a case that "glasses" is input into a search bar in a browser, the preset gallery is a set of images related to "glasses" that can be searched in the browser.

In implementations of the disclosure, the reference image is an image similar to the target image. The reference image and the target image may have similar contents or similar compositions, which is not limited herein. It is to be noted that the reference image may have a same object as the target image. Taking human face images as an example, by displaying other images of the same person, efficiency of finding out images of the same person can be improved.

The method for displaying the reference image is not limited in the disclosure. The reference image may be displayed directly, or a thumbnail image of the reference image may be pushed and the complete reference image may be displayed after the thumbnail image is clicked.

In one possible example, step S203 includes the following steps B11-B13.

B11, an image feature of the target image is determined.

The image feature includes a type, color, composition, etc., which is not limited herein. Further, if the image is a human image, the image feature may further include a facial feature, skin color, facial expression, clothing, action, personality, hairstyle, etc. If the image is a desktop image, the feature image may further include fitness with a desktop icon and the like.

The method for determining the image feature of the target image is not limited in the disclosure. The image feature may be extracted with a trained neural network. If there are multiple target images, in one possible example, the image feature of the target images may be determined as follows.

B111, each of the multiple target images is partitioned to obtain multiple sub-region image sets.

Each sub-region image set corresponds to one region. Each sub-region image set includes at least one sub-region image. Partitioning may be performed according to image locations. For example, the image may be partitioned into 9 blocks, where each sub-region image set corresponds to one block. Partitioning may also be performed according to image types. For example, people and background in the image can be separated. Partitioning may also be performed according to region locations. For example, if the image is a human image, the image can be partitioned into regions each corresponding to a facial feature. In this case, the multiple sub-region image sets may be a face image set, an eye image set, a nose image set, and a mouth image set.

B112, feature extraction is performed on each sub-region image in the multiple sub-region image sets to obtain multiple sub-region feature sets.

Each sub-region image corresponds to one sub-region feature set. It can be understood that by performing feature extraction on each sub-region image, accuracy of feature recognition can be improved.

B113, an image feature(s) of the multiple target images is obtained by counting the number of features of each sub-region feature in each of the multiple sub-region feature sets.

In step B113, a feature corresponding to the sub-region feature set with the largest number of features may be regarded as the image feature, or a feature with the number of features greater than a preset threshold may be regarded as the image feature, which is not limited herein.

It can be understood that in steps B111-B113, each of the multiple target images is partitioned first to obtain multiple sub-region image sets, and then features in each sub-region image set are extracted to obtain multiple sub-region feature sets. Finally, the image feature(s) of the multiple target images is obtained by counting the number of features of each sub-region feature in the multiple sub-region feature sets. That is, classification and extraction are performed first, and then counting and identification are performed, which can improve the accuracy of determining the image feature.

B12, a reference image corresponding to the image feature is obtained from the preset gallery.

The method for obtaining the reference image is not limited in the disclosure. An image feature of each image in the preset gallery may be obtained and compared with the image feature of the target image, so as to obtain a similarity value. The reference image can be determined according to the similarity value.

In a possible example, step B12 includes the following steps B121-B123.

B121, a comparison image is rendered according to the image feature of the multiple target images.

B122, the comparison image is compared with each image in the preset gallery to obtain multiple similarity values.

B123, in the multiple similarity values, at least one image corresponding to a similarity value greater than a second threshold is determined as the reference image.

The second threshold is not limited herein. It can be understood that the comparison image is rendered according to the image feature of the multiple target images, the comparison image thus combines the image feature(s) of the multiple target images. The comparison image is compared with each image in the preset gallery to obtain multiple similarity values, and the image corresponding to the similarity value greater than the second threshold is determined as the reference image. As such, accuracy of obtaining the reference image can be improved.

B13, the reference image is displayed.

It can be understood that in steps B11-B13, the image feature of the target image is first determined, then the reference image corresponding to the image feature is obtained from the preset gallery, and finally the reference image is displayed. As such, the reference image is determined according to the image feature, which can improve accuracy of displaying the reference image.

It is to be noted that the reference image may be multiple reference images. If there are multiple reference images, in one possible example, step B13 includes step B131 and step B132.

B131, a presentation order of the multiple reference images is determined according to the multiple similarity values.

B132, the multiple reference images are displayed in the presentation order.

The method for presenting the multiple reference images is not limited in the disclosure. The multiple reference images can be presented independently one by one, or presented according to display parameters configured in the electronic device. For example, if nine images are displayed in one page and a presentation order is first left and then right, first up and then down, as illustrated in FIG. 3, the reference images can be presented in an order of locations corresponding to P11, P12, P13, P21, P22, P23, P31, P32, and P33.

In this example, the greater the similarity value, the smaller the presentation order, that is, the earlier the image is displayed. It can be understood that by presenting the reference image with a large similarity value in the front, selection efficiency of the user can be improved.

In the method illustrated in FIG. 2, if the electronic device displays multiple images, the fixation duration of the user with respect to each of multiple images is determined via the eye tracking module. The target image in the multiple images is then determined according to the fixation duration, and the reference image corresponding to the target image in the preset gallery is displayed. That is, regardless of whether the user of the electronic device is a new user or not, the fixation duration with respect to each image in the current page can be determined via the eye tracking module, and the image(s) can be displayed according to the fixation duration of the user, so as to display the image that the user prefers, which can realize personalized image display.

In consistence with the implementation illustrated in FIG. 2, referring to FIG. 4, FIG. 4 is a schematic structural diagram of another electronic device 100 provided in implementations of the disclosure. As illustrated in FIG. 4, the electronic device 100 includes a processor 140, an eye tracking module 171, a communication interface 161, a display 120, and a memory 150. The processor 140 is coupled with the eye tracking module 171, the communication interface 161, the display 120, and the memory 150 through the bus 180. The memory 150 includes one or more programs 151 configured to be executed by the processor 140. The programs 151 include instructions configured to perform the following steps.

When multiple images are displayed in the electronic device 100, a fixation duration of a user with respect to each of the multiple images is determined via the eye tracking module 171. A target image in the multiple images is determined according to the fixation duration. A reference image corresponding to the target image in a preset gallery is displayed.

As can be seen, the image can be displayed according to the fixation duration of the user, so that the user-preferred image can be displayed, which achieves personalized image display.

In a possible example, in terms of determining the target image in the multiple images according to the fixation duration, the instructions in the programs 151 are specifically configured to perform the following steps. An interest value of a first image is determined according to a fixation duration of the first image, where the first image is any of the multiple images. The first image is determined as the target image in response to the interest value being greater than a first threshold.

In a possible example, in terms of determining the interest value of the first image according to the fixation duration of the first image, the instructions in the programs 151 are specifically configured to perform the following steps. An image location of the first image is determined. An average attention duration corresponding to the image location is determined. The interest value of the first image is obtained by calculating a ratio of the fixation duration of the first image to the average attention duration.

In a possible example, in terms of displaying the reference image corresponding to the target image in the preset gallery, the instructions in the programs 151 are specifically configured to perform the following steps.

An image feature of the target image is determined. A reference image corresponding to the image feature is obtained from the preset gallery. The reference image is displayed.

In a possible example, if the target image includes multiple target images, in terms of determining the image feature of the target image, the instructions in the programs 151 are specifically configured to perform the following steps.

Each of the multiple target images is partitioned to obtain multiple sub-region image sets, where each sub-region image set corresponds to one region and includes at least one sub-region image. Feature extraction is performed on each sub-region image in the multiple sub-region image sets to obtain multiple sub-region feature sets, where each sub-region image corresponds to one sub-region feature set. An image feature of the multiple target images is obtained by counting a number of features of each sub-region feature in the multiple sub-region feature sets.

In a possible example, in terms of obtaining the reference image corresponding to the image feature from the preset gallery, the instructions in the programs 151 are specifically configured to perform the following steps.

A comparison image is rendered according to the image feature of the multiple target images. The comparison image is compared with each image in the preset gallery to obtain multiple similarity values. At least one image corresponding to a similarity value greater than a second threshold in the multiple similarity values is determined as the reference image.

In a possible example, if the target image includes multiple target images, in terms of displaying the reference image, the instructions in the programs 151 are specifically configured to perform the following steps.

A presentation order of the multiple reference images is determined according to the plurality of similarity values. The multiple reference images are displayed in the presentation order.

The foregoing mainly introduces solutions of the implementations of the disclosure from the perspective of the method-side execution process. It can be understood that, in order to realize the above-mentioned functions, the electronic device includes corresponding hardware structures and/or software modules for executing each function. Those skilled in the art should easily realize that, in conjunction with the modules and algorithm steps of the various examples described in connection with the implementations provided herein, the disclosure can be implemented in the form of hardware or a combination of hardware and computer software. Whether a function is performed by hardware or computer software driving hardware depends on the specific application and design constraints of the technical solution. Those skilled in the art may implement the described functionality using different methods for each particular application, but such implementations should not be considered beyond the scope of this application.

In implementations of the disclosure, the electronic device may be divided into functional modules according to the foregoing method examples. For example, each functional module may be divided corresponding to each function, or two or more functions may be integrated into one processing module. The above-mentioned integrated modules can be implemented in the form of hardware, and can also be implemented in the form of software function modules. It should be noted that, the division of modules in the implementations of the disclosure is schematic, and is only a logical function division, and there may be other division manners in actual implementation.

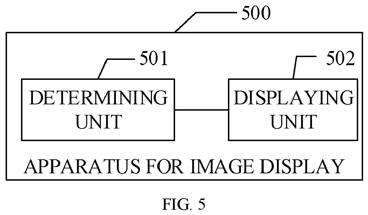

Referring to FIG. 5, an apparatus for image display illustrated in FIG. 5 is applied to an electronic device. The electronic device includes an eye tracking module. As illustrated in FIG. 5, the apparatus for image display includes a determining unit 501 and a displaying unit 502.

The determining unit 501 is configured to determine, via the eye tracking module, a fixation duration of a user with respect to each of multiple images on condition that the electronic device displays the multiple images, and determine a target image in the multiple images according to the fixation duration.

The displaying unit 502 is configured to display a reference image corresponding to the target image in a preset gallery.

As can be seen, the image can be displayed according to the fixation duration of the user, so that the user-preferred image can be displayed, which achieves personalized image display.

In a possible example, in terms of determining the target image in the multiple images according to the fixation duration, the determining unit 501 is specifically configured to determine an interest value of a first image according to a fixation duration of the first image, where the first image is any of the multiple images, and determine the first image as the target image in response to the interest value being greater than a first threshold.

In a possible example, in terms of determining the interest value of the first image according to the fixation duration of the first image, the determining unit 501 is specifically configured to determine an image location of the first image, determine an average attention duration corresponding to the image location, and obtain the interest value of the first image by calculating a ratio of the fixation duration of the first image to the average attention duration.

In a possible example, in terms of displaying the reference image corresponding to the target image in the preset gallery, the determining unit 501 is further configured to determine an image feature of the target image, and obtain a reference image corresponding to the image feature from the preset gallery. The displaying unit 502 is specifically configured to display the reference image.

In a possible example, if the target image includes multiple target images, in terms of determining the image feature of the target image, the determining unit 501 is specifically configured to partition each of the multiple target images to obtain multiple sub-region image sets, where each sub-region image set corresponds to one region and includes at least one sub-region image, perform feature extraction on each sub-region image in the multiple sub-region image sets to obtain multiple sub-region feature sets, where each sub-region image corresponds to one sub-region feature set, and obtain an image feature of the multiple target images by counting a number of features of each sub-region feature in the multiple sub-region feature sets.

In a possible example, in terms of obtaining the reference image corresponding to the image feature from the preset gallery, the determining unit 501 is specifically configured to render a comparison image according to the image feature of the multiple target images, compare the comparison image with each image in the preset gallery to obtain multiple similarity values, and determine at least one image corresponding to a similarity value greater than a second threshold in the multiple similarity values as the reference image.

In a possible example, if the target image includes multiple target images, in terms of displaying the reference image, the determining unit 501 is specifically configured to determine a presentation order of the multiple reference images according to the plurality of similarity values. The displaying unit is specifically configured to display the multiple reference images in the presentation order.

Implementations of the disclosure further provide a computer storage medium. The computer storage medium is configured to store a computer program. The computer program causes a computer to perform all or part of steps described in the method implementations of the disclosure. The computer includes an electronic device.

Implementations of the disclosure further provide a computer program product. The computer program product includes a non-transitory computer-readable storage medium storing a computer program. The computer program is operable for a computer to perform all or part of steps described in the method implementations of the disclosure. The computer program product can be a software package. The computer includes an electronic device.

It should be noted that, for the sake of simple description, the foregoing method implementations are all expressed as combinations of sequences of actions, but those skilled in the art should understand that the disclosure is not limited by the described action sequences. In accordance with the disclosure, certain steps may be performed in other orders or concurrently. Moreover, those skilled in the art should also understand that the implementations described in the specification are all preferred implementations, and the actions and modes involved are not necessarily required by the disclosure.

In the above-mentioned implementations, the description of each implementation has its own emphasis. For parts that are not described in detail in a certain implementation, reference may be made to the relevant descriptions of other implementations.

In the several implementations provided in this application, it should be understood that the disclosed apparatus may be implemented in other manners. For example, the apparatus implementations described above are only illustrative, for example, the division of units is only a logical function division. In actual implementation, there may be other division methods, for example, multiple units or components may be combined or integrated into another system, or some features can be ignored, or not implemented. On the other hand, the shown or discussed mutual coupling or direct coupling or communication connection may be through some interfaces, indirect coupling or communication connection of devices or units, and may be in electrical or other forms.

Units described as separate components may or may not be physically separated, and components shown as units may or may not be physical units, that is, may be located in one place, or may be distributed to multiple network units. Some or all of the units may be selected according to actual needs to achieve the purpose of the solutions in implementations.

In addition, each functional unit in each implementation of the disclosure may be integrated into one processing unit, or each unit may exist physically alone, or two or more units may be integrated into one unit. The above-mentioned integrated unit can be implemented in the form of hardware, and can also be implemented in the form of software program.

The integrated unit, if implemented in a software program mode and sold or used as a stand-alone product, may be stored in a computer-readable memory. Based on this understanding, the technical solution of the disclosure can be embodied in the form of a software product in essence, or the part that contributes to the prior art, or all or part of the technical solution, and the computer software product is stored in a memory, Several instructions are included to cause a computer device (which may be a personal computer, a server, or a network device, etc.) to execute all or part of the steps of the methods of the various implementations of the disclosure. The aforementioned memory includes a U disk, a read-only memory (ROM), a random access memory (RAM), a mobile hard disk, a magnetic disk or an optical disk and other media that can store program codes.

Those of ordinary skill in the art can understand that all or part of the steps in the various methods of the above implementations can be completed by instructing relevant hardware through a program, and the program can be stored in a computer-readable memory, and the memory can include a flash disk , ROM, RAM, disk or CD, etc.

The implementations of the disclosure are described in detail above, and specific examples are used herein to illustrate the principles and implementations of the disclosure. The descriptions of the above implementations are only used to help understand the methods and core ideas of the disclosure. Those of ordinary skill in the art, based on the idea of the disclosure, may have changes in the specific implementation manner and application scope. In conclusion, the contents of this specification should not be construed as limiting the disclosure.

## Claims

1. A method for image display, applied to an electronic device comprising an eye tracking module, the method comprising:
determining, via the eye tracking module, a fixation duration of a user with respect to each of a plurality of images on condition that the electronic device displays the plurality of images;
determining a target image in the plurality of images according to the fixation duration; and
displaying a reference image corresponding to the target image in a preset gallery.

2. The method of claim 1, wherein determining the target image in the plurality of images according to the fixation duration comprises:
determining an interest value of a first image according to a fixation duration of the first image, the first image being any of the plurality of images; and
determining the first image as the target image in response to the interest value being greater than a first threshold.

3. The method of claim 2, wherein determining the interest value of the first image according to the fixation duration of the first image comprises:
determining an image location of the first image;
determining an average attention duration corresponding to the image location; and
obtaining the interest value of the first image by calculating a ratio of the fixation duration of the first image to the average attention duration.

4. The method of any of claims 1-3, wherein displaying the reference image corresponding to the target image in the preset gallery comprises:
determining an image feature of the target image;
obtaining a reference image corresponding to the image feature from the preset gallery; and
displaying the reference image.

5. The method of claim 4, wherein on condition that the target image comprises a plurality of target images, determining the image feature of the target image comprises:
partitioning each of the plurality of target images to obtain a plurality of sub-region image sets, each sub-region image set corresponding to one region and comprising at least one sub-region image;
performing feature extraction on each sub-region image in the plurality of sub-region image sets to obtain a plurality of sub-region feature sets, each sub-region image corresponding to one sub-region feature set; and
obtaining an image feature of the plurality of target images by counting a number of features of each sub-region feature in the plurality of sub-region feature sets.

6. The method of claim 5, wherein obtaining the reference image corresponding to the image feature from the preset gallery comprises:
rendering a comparison image according to the image feature of the plurality of target images;
comparing the comparison image with each image in the preset gallery to obtain a plurality of similarity values; and
determining at least one image corresponding to a similarity value greater than a second threshold in the plurality of similarity values as the reference image.

7. The method of claim 6, wherein on condition that the reference image comprises a plurality of reference images, displaying the reference image comprises:
determining a presentation order of the plurality of reference images according to the plurality of similarity values; and
displaying the plurality of reference images in the presentation order.

8. An apparatus for image display, applied to an electronic device comprising an eye tracking module, the apparatus comprising:
a determining unit configured to determine, via the eye tracking module, a fixation duration of a user with respect to each of a plurality of images on condition that the electronic device displays the plurality of images, and determine a target image in the plurality of images according to the fixation duration; and
a displaying unit configured to display a reference image corresponding to the target image in a preset gallery.

9. The apparatus of claim 8, wherein in terms of determining the target image in the plurality of images according to the fixation duration, the determining unit is specifically configured to:
determine an interest value of a first image according to a fixation duration of the first image, the first image being any of the plurality of images; and
determine the first image as the target image in response to the interest value being greater than a first threshold.

10. The apparatus of claim 9, wherein in terms of determining the interest value of the first image according to the fixation duration of the first image, the determining unit is specifically configured to:
determine an image location of the first image;
determine an average attention duration corresponding to the image location; and
obtain the interest value of the first image by calculating a ratio of the fixation duration of the first image to the average attention duration.

11. The apparatus of any of claims 8-10, wherein in terms of displaying the reference image corresponding to the target image in the preset gallery, the determining unit is specifically configured to:
determine an image feature of the target image;
obtain a reference image corresponding to the image feature from the preset gallery; and
display the reference image.

12. The apparatus of claim 11, wherein on condition that the target image comprises a plurality of target images, in terms of determining the image feature of the target image, the determining unit is specifically configured to:
partition each of the plurality of target images to obtain a plurality of sub-region image sets, each sub-region image set corresponding to one region and comprising at least one sub-region image;
perform feature extraction on each sub-region image in the plurality of sub-region image sets to obtain a plurality of sub-region feature sets, each sub-region image corresponding to one sub-region feature set; and
obtain an image feature of the plurality of target images by counting a number of features of each sub-region feature in the plurality of sub-region feature sets.

13. The apparatus of claim 12, wherein in terms of obtaining the reference image corresponding to the image feature from the preset gallery, the determining unit is specifically configured to:
render a comparison image according to the image feature of the plurality of target images;
compare the comparison image with each image in the preset gallery to obtain a plurality of similarity values; and
determine at least one image corresponding to a similarity value greater than a second threshold in the plurality of similarity values as the reference image.

14. The apparatus of claim 13, wherein on condition that the reference image comprises a plurality of reference images, in terms of displaying the reference image, the determining unit is specifically configured to:
determine a presentation order of the plurality of reference images according to the plurality of similarity values; and
display the plurality of reference images in the presentation order.

15. An electronic device, comprising:
a processor;
an eye tracking module;
a display;
a communication interface; and
a memory configured to store one or more programs, the one or more programs being configured to be executed by the processor, the programs comprising instructions for performing operations of:
determining, via the eye tracking module, a fixation duration of a user with respect to each of a plurality of images on condition that the electronic device displays the plurality of images;
determining a target image in the plurality of images according to the fixation duration; and
displaying a reference image corresponding to the target image in a preset gallery.

16. The electronic device of claim 15, wherein in terms of determining the target image in the plurality of images according to the fixation duration, the programs comprise instructions for performing operations of:
determining an interest value of a first image according to a fixation duration of the first image, the first image being any of the plurality of images; and
determining the first image as the target image in response to the interest value being greater than a first threshold.

17. The electronic device of claim 16, wherein in terms of determining the interest value of the first image according to the fixation duration of the first image, the programs comprise instructions for performing operations of:
determining an image location of the first image;
determining an average attention duration corresponding to the image location; and
obtaining the interest value of the first image by calculating a ratio of the fixation duration of the first image to the average attention duration.

18. The electronic device of claim 16, wherein in terms of displaying the reference image corresponding to the target image in the preset gallery, the programs comprise instructions for performing operations of:
determining an image feature of the target image;
obtaining a reference image corresponding to the image feature from the preset gallery; and
displaying the reference image.

19. The electronic device of any of claims 15-18, wherein on condition that the target image comprises a plurality of target images, in terms of determining the image feature of the target image, the programs comprise instructions for performing operations of:
partitioning each of the plurality of target images to obtain a plurality of sub-region image sets, each sub-region image set corresponding to one region and comprising at least one sub-region image;
performing feature extraction on each sub-region image in the plurality of sub-region image sets to obtain a plurality of sub-region feature sets, each sub-region image corresponding to one sub-region feature set; and
obtaining an image feature of the plurality of target images by counting a number of features of each sub-region feature in the plurality of sub-region feature sets.

20. A computer-readable storage medium configured to store a computer program, the computer program causing a computer to perform the method of any of claims 1-7.
